**Europäisches Patentamt**

**European Patent Office**

**Office européen des brevets**

(19)

(11) Numéro de publication : **0 342 123 B1**

(12)

# FASCICULE DE BREVET EUROPEEN

(45) Date de publication du fascicule du brevet :
**12.08.92 Bulletin 92/33**

(51) Int. Cl.⁵ : **G01B 11/02**

(21) Numéro de dépôt : **89401296.2**

(22) Date de dépôt : **10.05.89**

(54) **Procédé de positionnement d'un objet par rapport à un plan, procédé de mesure de longueur et dispositifs de mise en oeuvre de ces procédés.**

(30) Priorité : **11.05.88 FR 8806413**

(43) Date de publication de la demande :
**15.11.89 Bulletin 89/46**

(45) Mention de la délivrance du brevet :
**12.08.92 Bulletin 92/33**

(84) Etats contractants désignés :
**BE CH DE ES GB IT LI LU NL SE**

(56) Documents cités :
**FR-A- 2 188 818**
**US-A- 4 332 475**

(56) Documents cités :
**IBM TECHNICAL DISCLOSURE BULLETIN,
vol. 29, no. 1, juin 1986, pages 207-209,
Armonk, New York, USA; "Refocused Optical-
Profilometer with Telecentric Scanning for
Reliable Height Measurements"
FEINWERKTECHNIK & MESSTECHNIK, vol.
94, no. 7, octobre 1986, pages 433-437, München, DE; A. VISSER et
al.:"HochgenauesDurchlicht-Wegmessverfahren"**

(73) Titulaire : **PHOTONETICS S.A.**
**52, Avenue de l'Europe**
**F-78160 Marly le Roi (FR)**

(72) Inventeur : **Graindorge, Philippe**
**5, rue du Crucifix**
**F-21800 Crimolois (FR)**

(74) Mandataire : **Michelet, Alain et al**
**Cabinet Harlé et Phelip 21 rue de la**
**Rochefoucauld**
**F-75009 Paris (FR)**

EP 0 342 123 B1

**Description**

La présente invention concerne un procédé de positionnement d'un objet par rapport à un plan, un procédé de mesure de longueur et les dispositifs de mise en oeuvre de ces procédés.

Il est fréquemment nécessaire dans l'industrie de positionner un objet avec une bonne précision par rapport à un plan. Cela peut être nécessaire lors de l'usinage d'une pièce ou lors de l'assemblage de plusieurs pièces. Un tel positionnement réalisé en deux points différents permet également d'effectuer la mesure de la longueur séparant ces deux points.

Les procédés de positionnement et de mesure d'objets par voie optique sont traditionnels. Le plus souvent ces procédés comportent le repérage de points de l'objet concerné par des pointés optiques. Les mesures de longueur sont obtenues soit par rapport à des repères fixes, soit par rapport à des repères mobiles.

Le brevet FR-2 188 818 décrit un procédé de mesure dans lequel on déplace un faisceau laser perpendiculaire à la grandeur mesurée. La distribution d'énergie dans la section transversale présente un élément singulier qui peut être reconnu lorsqu'un objet opaque intercepte progressivement le faisceau. La précision du repérage du bord de l'objet est améliorée par rapport aux méthodes traditionnelles.

Plus récemment par exemple dans le brevet américain US-4 332 475, il a été proposé de mesurer la dimension d'un objet en le balayant par un faisceau lumineux et en mesurant le temps de passage du faisceau de l'un de ses bords à l'autre.

Cette dernière méthode de mesure est limitée à des objet dont la dimension est inférieure à l'amplitude du balayage du faisceau et que, d'autre part, la détection des objets comporte une part d'incertitude dûe à la largeur du faisceau effectuant ce balayage.

Le but de la présente invention est un procédé de positionnement d'un objet par rapport à un plan par le balayage d'un faisceau lumineux qui permet d'atteindre une précision de positionnement sensiblement inférieure au diamètre du faisceau de balayage.

C'est un autre objectif de l'invention que de permettre la mesure de la longueur d'un objet comprise entre deux épaulements sans être limitée par l'amplitude du balayage du faisceau lumineux.

A cet effet, le procédé de positionnement d'un objet par rapport à un plan, selon l'invention, est du type dans lequel le dit plan est balayé par un faisceau lumineux entre un ensemble source et un ensemble de détection, on translate l'objet approximativement perpendiculairement au dit plan, on mesure le signal reçu en fonction du temps, on arrête la translation de l'objet lorsque le signal reçu présente un forme particulière.

Par simplification on appelle ici -plan- balayé par le faisceau lumineux le plan balayé par son axe.

Selon l'invention, l'objet présente un épaulement et la forme particulière du signal reçu recherchée correspond à la position dans laquelle l'épaulement obture une part fixe prédéterminée du faisceau lumineux pendant une partie du balayage du faisceau lumineux.

Selon un autre aspect, l'invention concerne un procédé de mesure de longueur d'un objet comprise entre deux épaulements dans lequel on positionne le premier épaulement par rapport à un plan, on déplace l'objet perpendiculairement au dit plan jusqu'à positionner le deuxième épaulement par rapport au dit plan, on mesure la longueur du déplacement de l'objet qui est égale à la longueur recherchée. Les positionnements successifs des épaulements sont effectués conformément au procédé présenté plus haut.

L'invention concerne également un dispositif pour la mise en oeuvre des procédés de l'invention dans lequel une source lumineuse produit un faisceau parallèle, un organe de déviation angulaire de ce faisceau placé au foyer d'un système optique produit le balayage du dit faisceau parallèlement à lui-même, un récepteur placé au foyer d'un système optique émet un signal fonction de l'intensité lumineuse reçue. Il comporte également des moyens électroniques de traitement du signal émis par le récepteur en fonction du temps et un support destiné à recevoir un objet et à permettre son déplacement perpendiculairement au plan de balayage du faisceau.

L'invention sera décrite plus en détail en référence aux figures dans lesquelles :

– La figure 1 est une vue de face de l'ensemble de l'installation.

– La figure 2 est une vue du dessus de l'ensemble de l'installation.

– La figure 3 est une représentation du signal reçu et de sa dérivée lorsque l'épaulement de l'objet est au voisinnage du plan balayé par le faisceau lumineux.

– La figure 4 représente différents types de signaux reçus de leurs dérivées en fonction de la position de l'épaulement par rapport au plan balayé.

– La figure 5 représente différentes formes de dérivées du signal obtenues en fonction de l'importance de l'épaulement.

– La figure 6 représente un des modes possibles du traitement du signal reçu.

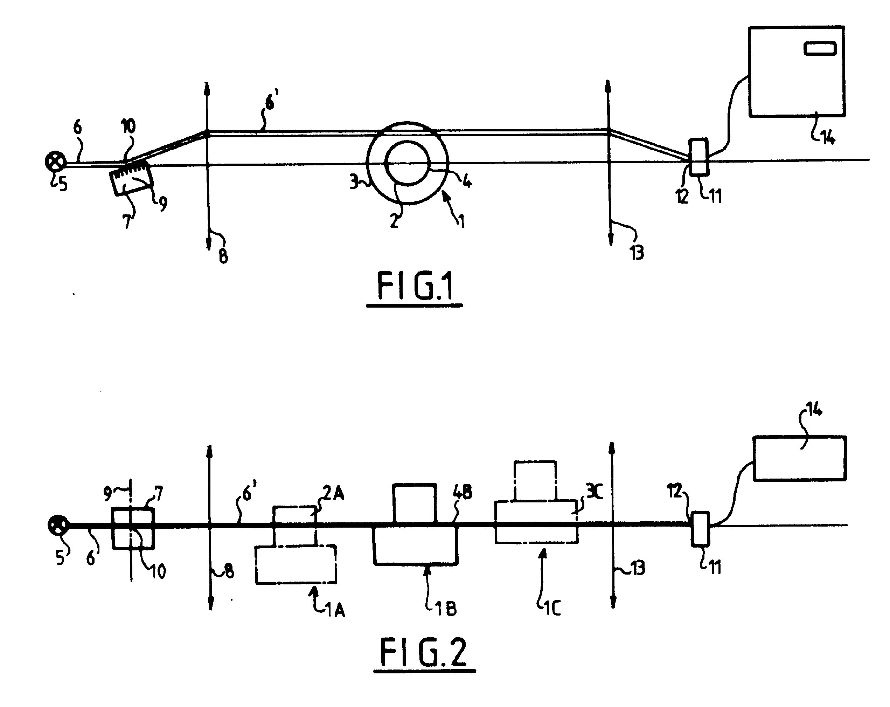

Les figures 1 et 2 représentent une vue générale du dispositif de mesure. L'objet 1 est composé de deux parties respectivement 2 et 3 séparées par un épaulement 4.

En pratique, l'objet 1 présente souvent une symétrie de révolution, toutefois il peut avoir toute autre forme pourvu qu'il comporte un élément que nous préciserons plus loin susceptible de remplir la fonction attribuée à l'épaulement 4.

Une source lumineuse 5, par exemple une source laser, produit un faisceau parallèle 6. Ce faisceau atteint un organe de déviation 7 placé au foyer objet 10 d'un système optique 8. L'organe de déviation 7 est par exemple un miroir mobile autour d'un axe 9. Ainsi, lors du mouvement de l'organe de déviation 7, le faisceau lumineux balaye un plan qui est celui de la figure 1 et qui au contraire est vu en coupe sur la figure 2. Le foyer 10 du système optique 8 étant confondu avec le point d'incidence du faisceau lumineux 6 sur l'organe de déviation mobile 7, le balayage de ce faisceau 6, après le système optique 8, est réalisé parallèlement à lui-même. Un récepteur 11 est placé au foyer image 12 du sytème optique 13 dont l'axe optique est sensiblement confondu avec celui du système optique 8. Ainsi, quelle que soit la position du faisceau lumineux 6', il sera reçu, à condition de n'avoir pas été obturé, par le récepteur 11. Des moyens électroniques 14 permettent le traitement du signal et l'extraction de la mesure recherchée. L'objet 1 est porté par un support permettant son déplacement perpendiculaire au plan de balayage du faisceau. Toutefois au cours d'un balayage de mesure du faisceau 6' l'objet est fixe. Il a été représenté sur la figure 2 en trois positions successives A, B, C, selon son avancement.

Dans les deux situations extrêmes, A et C, le faisceau lumineux 6', au cours de son balayage, ne rencontre tout d'abord aucun obstacle, le récepteur 11 fournit donc aux moyens électroniques 14 un signal d'amplitude maximum, puis il rencontre le bord de l'objet respectivement en 2A et 3C, ce qui produit l'obturation du faisceau 6' et donc la délivrance d'un signal minimum par le récepteur 11 avant de réapparaître à la fin de l'obturation. La vitesse de balayage du faisceau 6' étant constante, le temps d'obturation correspondant à la durée pendant laquelle le récepteur 11 émet un signal minimum est proportionnel à la dimension de l'objet dans le plan de balayage et parallèlememnt à la direction du balayage (c'est-à-dire sensiblement perpendiculaire à la direction du faisceau). De manière connue, la mesure de ce temps d'obturation permet donc de mesurer la dimension de l'objet dans le sens précisé plus haut.

Nous nous arrêterons plus en détail sur la situation lorsque l'objet 1 est en position 1B dans laquelle au cours de son balayage, le faisceau 6' est susceptible d'être partiellement obturé par l'épaulement 4B.

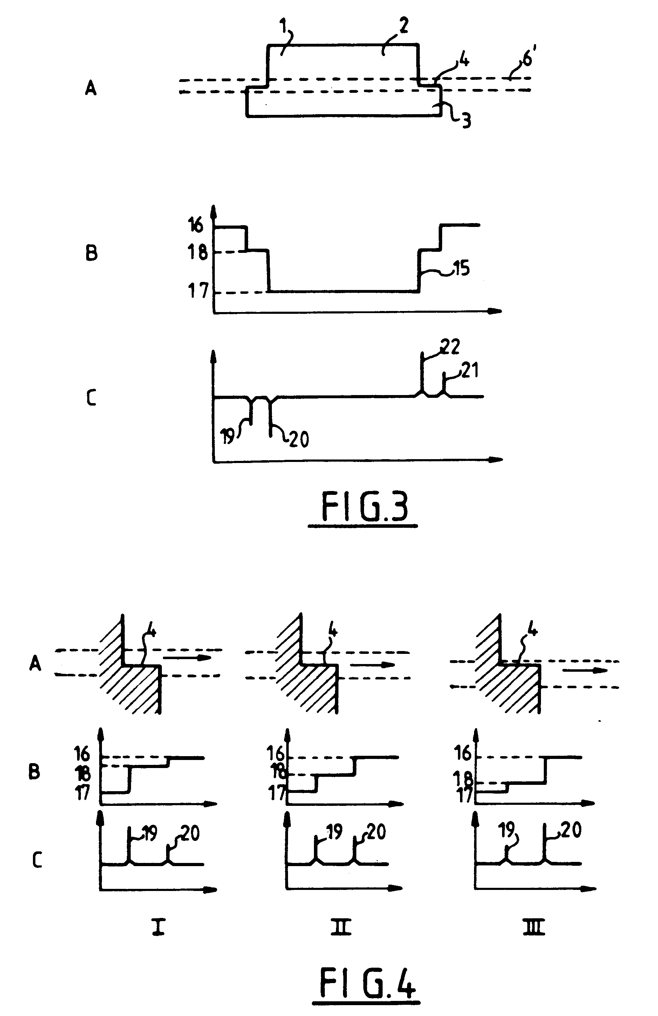

Sur la figure 3 cette situation est représentée en détail : en A sont représentés l'objet 1 et le faisceau lumineux 6', en B le signal 15 émis par le récepteur 11 et en C sa dérivée.

Lors d'un balayage du faisceau 6' au niveau de l'épaulement 4 en partant par exemple du haut dans la représentation de la figure 1, le signal est tout d'abord maximum à son niveau 16, ensuite il est partiellement obturé au niveau de l'épaulement 3 tel que répresenté en A et fournit un signal de niveau intermédiaire 18, il est ensuite complètement obturé au niveau de la partie 2 de la pièce et le signal fourni est alors le signal minimum 17. Ensuite, dans la partie basse de la pièce, la situation inverse est reproduite, le faisceau lumineux 6', lorsqu'il ne traverse plus la partie 2 de la pièce mais seulement l'épaulement au niveau de la partie 3 est partiellement obturé et fournit donc un signal de niveau moyen 18, puis lorsqu'il n'est plus du tout obturé par la pièce un signal de valeur maximum 16.

De manière classique, la dérivée de ce signal B est représentée en C. Elle est composée de deux pics de DIRAC négatifs 19 et 20 et de deux pics positifs 21 et 22.

La figure 4 présente les éléments analogues à ceux de la figure 3 pour des degrés d'avancement différents I, II, III de l'objet 1 par rapport au plan balayé par le faisceau lumineux 6' au moment du balayage. Dans ces différentes situations, les niveaux maximum 16 et minimum 17 sont inchangés, par contre le niveau intermédiaire 18 est fonction de la position de l'objet 1.

L'égalité de deux pics 19 et 20 présents dans la dérivée permet de définir avec précision la position de l'objet par rapport au plan de balayage et d'assurer une bonne reproductibilité de celle-ci.

A titre d'exemple, une précision de 2μm sur la position de l'objet 1 a pu être obtenue alors que le faisceau lumineux était un faisceau laser ayant un diamètre de 0,1mm.

Les pics 19, 20 sont obtenus sur la dérivée dès que le signal lui-même présente des ruptures nettes de niveau. L'épaulement auquel il est fait référence dans ce texte est constitué de tout moyen attaché à l'objet 1 qui permette de produire ce type de rupture lors du balayage du faisceau 6'. Ainsi, dans une pièce de révolution, il pourra s'agir d'un changement brutal de diamètre mais un résultat analogue peut également être obtenu par de nombreux autres moyens produits soit par la forme de l'objet lui-même soit par une pièce rapportée à l'objet lui-même. Ces moyens produisant une obturation partielle du faisceau lumineux 6' constante pour un balayage donné et variable avec la position de l'objet. Les passages au cours d'un balayage de la transmission complète (absence d'obturation) à l'obturation partielle puis à l'obturation totale doivent être francs.

L'égalité de l'amplitude des deux pics 19, 20 de la dérivée du signal correspond à la position dans laquelle l'épaulement 4 de l'objet est sensiblement au milieu du faisceau lumineux 6', puisque dans ce cas l'amplitude moyenne 8 du signal est à égale distance de l'amplitude minimum 17 et de l'amplitude maximum 16. On comprend que sans sortir du cadre de l'invention un rapport, différent de l'égalité, pourvu qu'il soit constant et reste significatif peut être choisi entre l'amplitude de ces deux pics 19, 20. Lorsque ce rapport différent de 1 est atteint, l'épaulement de l'objet 4 se trouve alors dans un plan de référence qui est légèrement décalé par rapport au plan balayé par l'axe du faisceau lumineux 6′.

Des situations peuvent être rencontrées dans lesquelles l'épaulement 4 de l'objet 1 a une faible amplitude et en particulier peut être inférieure au diamètre du faisceau lumineux 6′. La dérivée du signal a alors la forme représentée sur la figure en B ou C, c'est-à-dire produite par le rapprochement de deux pics 16, 17 dont les bases viennent se confondre. Ces conditions permettent également de positionner convenablement l'objet 1.

Quelle que soit l'amplitude de l'épaulement par rapport au diamètre du faisceau lumineux et donc la forme du signal, la position dans laquelle l'épaulement de l'objet est dans le plan de balayage du faisceau est la position pour laquelle le maximum de la dérivée du signal au cours d'un balayage est le plus faible par rapport au maxima obtenu dans les autres balayages. Cette détection du minimum relatif du maximum de la dérivée du signal permet donc en toutes circonstances d'assurer un positionnement précis et fiable de l'objet 1.

La méthode de balayage mise en oeuvre pour assurer le positionnement de l'objet permet aisément, comme nous l'avons vu plus haut, d'effectuer la mesure de la dimension de la pièce perpendiculairement à la direction du faisceau lumineux et dans le plan de balayage de celui-ci. Ce type de mesure à différents niveaux de la pièce peut donc être facilement réalisé simultanément au positionnement de la pièce.

L'invention concerne également un procédé de mesure de la longueur d'un objet comprise entre deux épaulements 4. Selon ce procédé, on positionne un premier épaulement 4 de l'objet par rapport au faisceau lumineux de mesure conformément au procédé de positionnement exposé plus haut, ensuite on produit l'avancement du support portant l'objet 1 dans la direction perpendiculaire au plan de balayage du faisceau 6′ jusqu'à obtenir le positionnement d'un deuxième épaulement par rapport au plan de balayage du faisceau. La distance d'avancement du support mesurée par tout moyen, par exemple par rapport à une règle de référence, fournit la distance entre les deux épaulements avec une précision découlant de la précision obtenue sur le positionnement d'un épaulement.

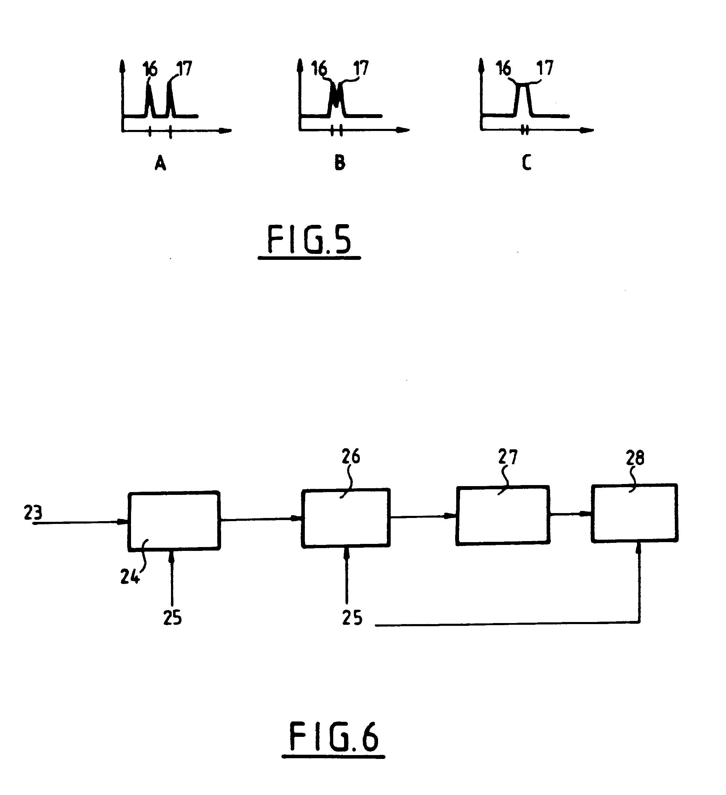

Les fonctions réalisées par les moyens électroniques de traitement du signal fourni par le photodétecteur sont de préférence celles représentées sur la figure 6 : la dérivée 23 du signal est analysée par un détecteur de crête 24 qui à chaque balayage fournit la valeur du maximum de la dérivée à un échantillonneur 26. Un convertisseur analogique digital 27 transmet alors ses valeurs au calculateur 28 qui commande les déplacements du support de l'objet 1. Le début et la fin de chaque balayage du faisceau lumineux 6′ sont détectés sous forme d'un signal 25 et assurent la répétition de l'opération par activation du détecteur de crête 24 et la remise à zéro de l'échantillonneur 26.

Le calculateur mémorise la valeur du maximum de la dérivée pour chaque balayage. Il commande le support de l'objet 1 jusqu'à minimiser cette valeur.

Dans un mode de réalisation alternatif, il est également possible d'envisager que le calculateur 28 exploite directement le signal fourni par le récepteur photo-électrique 11 et non plus sa dérivée. Il commande alors le support de l'objet 1 en sorte que la valeur du signal moyen 18 soit aussi proche que possible de la valeur moyenne entre le signal minimum 17 et le signal maximum 16. A cet effet, l'échantillonneur 26 utilise des valeurs du signal mesurées de part et d'autre de chaque pic de la dérivée du signal.

Ainsi, les valeurs exploitées par le calculateur 28 à chaque balayage sont donc celles obtenues de part et d'autre des pics détectés par le détecteur 24 prévu à cet effet.

## Revendications

1. Procédé de positionnement d'un objet (1) par rapport à un plan dans lequel,
   – ledit plan est balayé par l'axe d'un faisceau lumineux entre un ensemble source et un ensemble détection,
   – on translate l'objet approximativement perpendiculairement au dit plan,
   – on mesure le signal reçu en fonction du temps,
   – on arrête la translation de l'objet lorsque le signal reçu présente une forme particulière,
   caractérisé en ce que la forme particulière du signal reçu recherchée correspond à la position dans laquelle un épaulement (4) de l'objet obture une part fixe prédéterminée du faisceau lumineux pendant une partie du balayage du faisceau lumineux.

2. Procédé selon la revendication 1, caractérisé en ce que la recherche de la forme particulière est faite sur la dérivée du signal par rapport au temps.

3. Procédé selon la revendication 2, caractérisé en ce que la dérivée du signal par rapport au temps comporte deux pics, un rapport donné de l'amplitude de ces deux pics définissant la forme particulière recherchée.

4. Procédé selon la revendication 3, caractérisé en ce que le rapport recherché est l'égalité de l'amplitude.

5. Procédé selon la revendication 2, caractérisé en ce que la forme recherchée est la valeur relative minimale du maximum de la dérivée au cours d'un balayage.

6. Procédé selon la revendication 2, caractérisé en ce que la dérivée du signal comporte un minimum relatif entre deux maxima, ce minimum définissant la forme particulière recherchée.

7. Procédé selon la revendication 2, caractérisé en ce que la forme particulière du signal reçu recherchée est la présence sur le signal lui-même d'un niveau intermédiaire également distant du niveau maximum du signal obtenu lorsqu'il n'est pas obturé par l'objet et du niveau minimum obtenu lorsqu'il est complètement obturé par l'objet.

8. Procédé selon la revendication 7, caractérisé en ce que lors du balayage du faisceau chaque changement de niveau du signal est repéré par la présence d'un pic sur sa dérivée, les mesures de niveau étant effectuées de part et d'autre de chacun de ces pics.

9. Procédé de positionnement selon l'une quelconque des revendications 1 à 8, caractérisé en ce que lors du balayage le faisceau est déplacé parallèlement à lui-même.

10. Procédé selon la revendication 9, caractérisé en ce que l'on exploite le signal reçu pour mesurer la dimension de l'objet dans la direction du plan de balayage perpendiculaire à la direction de translation du faisceau.

11. Procédé de mesure de la longueur d'un objet comprise entre deux épaulements dans lequel on positionne le premier épaulement par rapport à un plan, on déplace l'objet perpendiculairement au dit plan jusqu'à positionner le deuxième épaulement par rapport au dit plan, on mesure la longueur du déplacement de l'objet qui est égale à la longueur recherchée, caractérisé en ce que les positionnements des épaulements sont effectués conformément au procédé de l'une quelconque des revendications 1 à 8.

12. Dispositif de mise en oeuvre d'un procédé de l'une quelconque des revendications 1 à 11, caractérisé en ce qu'il comporte :
- une source lumineuse (5) produisant un faisceau parallèle (6),
- un organe de déviation angulaire (7) de ce faisceau placé au foyer d'un système optique (8) et produisant le balayage du dit faisceau (6′) parallèlement à lui-même,
- un récepteur (11) placé au foyer (12) d'un système optique (13) et émettant un signal fonction de l'intensité lumineuse reçue,
- des moyens électroniques (14) de traitement du signal émis par le récepteur en fonction du temps,
- un support destiné à recevoir l' objet (1) et à permettre son déplacement perpendiculairement au plan de balayage du faisceau.

13. Dispositif selon la revendication 12, caractérisé en ce que la source lumineuse (5) est un laser.

14. Dispositif selon l'une des revendications 12 et 13, caractérisé en ce que les moyens électroniques comportent des moyens assurant la numérisation du signal.

15. Dispositif selon l'une quelconque des revendications 12 à 14, caractérisé en ce qu'il comporte des moyens de mesure du déplacement du support de l'objet (1).

**Patentansprüche**

1. Verfahren zur Positionierung eines Objekts (1) in bezug auf eine Ebene, bei dem
- die Ebene durch die Achse eines Lichtstrahls zwischen einer Quelleneinheit und einer Detektoreinheit abgetastet wird;
- das Objekt ungefähr senkrecht zur Ebene bewegt wird;
- das empfangene Signal als Funktion der Zeit gemessen wird;
- die Bewegung des Objekts angehalten wird, wenn das empfangene Signal eine bestimmte Form aufweist,
dadurch gekennzeichnet, daß
die gesuchte bestimmte Form des empfangenen Signals der Position entspricht, in der eine Schulter (4) des Objekts einen vorbestimmten festen Anteil des Lichtstrahls während eines Teils des Abtastens mit dem Lichtstrahl blockiert.

2. Verfahren nach Anspruch 1, dadurch gekennzeichnet, daß die Suche nach der bestimmten Form durch die Ableitung des Signals in bezug auf die Zeit erfolgt.

3. Verfahren nach Anspruch 2, dadurch gekennzeichnet, daß die zeitbezogene Ableitung des Signals zwei Peaks aufweist, wobei ein vorgegebenes Verhältnis zwischen den Amplituden der beiden Peaks die gesuchte bestimmte Form definiert.

4. Verfahren nach Anspruch 3, dadurch gekennzeichnet, daß das gesuchte Verhältnis die Gleichheit der Amplituden ist.

5. Verfahren nach Anspruch 2, dadurch gekennzeichnet, daß die gesuchte Form der relative Minimalwert des Maximums der Ableitung während einer Abtastung ist.

6. Verfahren nach Anspruch 2, dadurch gekennzeichnet, daß die Ableitung des Signals zwischen zwei Maxima ein relatives Minimum aufweist, wobei das Minimum die gesuchte bestimmte Form definiert.

7. Verfahren nach Anspruch 2, dadurch gekennzeichnet, daß die gesuchte bestimmte Form des empfangenen Signals das Vorhandensein eines mittleren Pegels auf dem Signal selbst ist, wobei der mittlere Pegel den gleichen Abstand zum Maximalpegel des Signals, der erhalten wird, wenn er nicht durch das Objekt blockiert ist, und zum Minimalpegel aufweist, der erhalten wird, wenn er vollständig von dem Objekt blockiert ist.

8. Verfahren nach Anspruch 7, dadurch gekennzeichnet, daß beim Abtasten mit dem Strahl jede Änderung des Signalpegels durch das Vorhandensein eines Peaks durch seine Ableitung angezeigt wird, wobei die Messung des Pegels gleichermaßen für jeden der Peaks erfolgt.

9. Verfahren zum Positionieren nach einem der Ansprüche 1 bis 8, dadurch gekennzeichnet, daß der Lichtstrahl während des Abtastens zu sich selbst parallel verschoben wird.

10. Verfahren nach Anspruch 9, dadurch gekennzeichnet, daß das empfangene Signal zur Messung der Abmessung des Objekts in der Richtung der Abtastebene senkrecht zur Bewegungsrichtung des Strahls verwendet wird.

11. Verfahren zur Messung der zwischen zwei Schultern vorhandenen Länge eines Objekts, bei dem die erste Schulter in bezug auf eine Ebene positioniert wird, das Objekt senkrecht zu der Ebene verschoben wird, bis die zweite Schulter in bezug zur Ebene positioniert ist, und die Länge der Verschiebung des Objekts, die gleich der gesuchten Länge ist, gemessen wird, dadurch gekennzeichnet, daß die Positionierung der Schultern nach dem Verfahren gemäß einem der Ansprüche 1 bis 8 erfolgt.

12. Vorrichtung zur Druchführung des Verfahrens nach einem der Ansprüche 1 bis 11, dadurch gekennzeichnet, daß sie aufweist:
   – eine Lichtquelle (5), die einen parallelen Strahl (6) erzeugt,
   – eine Einrichtung (7) zur Winkelablenkung des Strahls, die im Brennpunkt eines optischen Systems (8) angeordnet ist und die die Abtastung mit dem Strahl (6′) parallel zu diesem selbst bewirkt,
   – ein Rezeptor (11), der im Brennpunkt (12) eines optischen Systems (13) angeordnet ist und ein von der empfangenen Lichtstärke abhängiges Signal ausgibt,
   – elektronische Einrichtungen (14) zur Verarbeitung des von dem Rezeptor ausgegebenen Signals in bezug auf die Zeit,
   – eine Stütze zur Aufnahme des Objekts (1) und zum Ermöglichen seiner Verschiebung senkrecht zur Abtastebene des Strahls.

13. Vorrichtung nach Anspruch 12, dadurch gekennzeichnet, daß die Lichtquelle (5) ein Laser ist.

14. Vorrichtung nach Anspruch 12 und 13, dadurch gekennzeichnet, daß die elektronischen Einrichtungen Einrichtungen zur Digitalisierung des Signals aufweisen.

15. Vorrichtung nach einem der Ansprüche 12 bis 14, dadurch gekennzeichnet, daß sie Einrichtungen zum Messen der Verschiebung der Stütze des Objekts (1) aufweist.

**Claims**

1. Method of positioning an object (1) with respect to a plane in which,
   – the said plane is swept by the axis of a light beam between a source assembly and a detection assembly,
   – the object is translated approximately perpendicularly to the said plane,
   – the signal received is measured as a function of time,
   – the translation of the object is halted when the signal received has a particular form,
characterised in that the sought-after particular form of the signal received corresponds to the position in which a shoulder (4) of the object masks a predetermined fixed portion of the light beam during a part of the sweep of the light beam.

2. Method according to Claim 1, characterised in that the search for the particular form is done on the derivative of the signal with respect to time.

3. Method according to Claim 2, characterised in that the derivative of the signal with respect to time includes two peaks, a given ratio of the amplitude of these two peaks defining the particular form sought.

4. Method according to Claim 3, characterised in that the ratio sought is the equality of the amplitude.

5. Method according to Claim 2, characterised in that the form sought is the relative minimum value of the maximum of the derivative in the course of a sweep.

6. Method according to Claim 2, characterised in that the derivative of the signal includes a relative minimum between two maxima, this minimum defining the particular form sought.

7. Method according to Claim 2, characterised in that the sought-after particular form of the signal received is the presence in the signal itself of an intermediate level equally distant from the maximum level of the signal obtained when it is not masked by the object and from the minimum level obtained when it is completely masked by the object.

8. Method according to Claim 7, characterised in that during the sweeping of the beam each change in level of the signal is marked by the presence of a peak in its derivative, the measurements of level being performed on either side of each of these peaks.

9. Method of positioning according to any one of Claims 1 to 8, characterised in that during the sweep the beam is displaced parallel to itself.

10. Method according to Claim 9, characterised in that the signal received is exploited in order to measure the dimension of the object in the direction of the plane of sweep perpendicular to the direction of translation of the beam.

11. Method of measuring that length of an object included between two shoulders, in which the first shoulder is positioned with respect to a plane, the object is displaced perpendicularly to the said plane until the second shoulder is positioned with respect to the said plane, the length of the displacement of the object which is equal to the sought-after length is measured, characterised in that the positionings of the shoulders are performed in accordance with the method of any one of Claims 1 to 8.

12. Device for implementing a method of any one of Claims 1 to 11, characterised in that it includes:
   – a light source (5) producing a parallel beam (6),

– a member (7) for angular deflection of this beam, placed at the focus of an optical system (8) and producing the sweeping of the said beam (6′) parallel to itself,

– a receiver (11) placed at the focus (12) of an optical system (13) and emitting a signal dependent on the light intensity received,

– electronic means (14) of processing the signal emitted by the receiver as a function of time,

– a support intended to receive the object (1) and permit displacement thereof perpendicularly to the plane of sweep of the beam.

13. Device according to Claim 12, characterised in that the light source (5) is a laser.

14. Device according to either one of Claims 12 and 13, characterised in that the electronic means include means securing the digitising of the signal.

15. Device according to any one of Claims 12 to 14, characterised in that it includes means of measuring the displacement of the support for the object (1).

FIG.1

FIG.2

EP 0 342 123 B1

FIG.3

FIG.4

9

FIG.5

FIG.6

10